# EUROPEAN PATENT APPLICATION

(11) **EP 4 070 893 A1**
(43) Date of publication of application: **12.10.2022**
(21) Application number: 20896837.0
(22) Date of filing: 10.11.2020
(51) Int. Cl.: B05D 7/24, C09D 115/02, C09D 127/12, C09D 163/00, C09K 3/10, B32B 15/082, F16J 15/08, C09D 7/63

(54) **COATING SOLUTION AND FLUORORUBBER-METAL LAMINATED SHEET USING SAME**

(30) Priority: 06.12.2019 JP 2019221059
(71) Applicant: NOK Corporation, Minato-ku Tokyo 105-8585 (JP)
(72) Inventor: WATANABE, Isao, Fujisawa-shi, Kanagawa 251-0042 (JP); TAKEKAWA, Daiki, Fujisawa-shi, Kanagawa 251-0042 (JP)
(74) Representative: Beckmann, Claus
(86) International application number: PCT/JP2020/041871
(87) International publication number: WO 2021/111819

(57) **Abstract**

A coating solution comprising an organic solvent solution containing polyol-crosslinkable fluororubber, a polyol vulcanizing agent, and N-phenyl-3-aminopropyltrialkoxysilane, preferably a coating solution further containing an epoxy resin in addition thereto, and a fluororubber metal laminated sheet formed by applying the above coating solution to a metal sheet, followed by vulcanization. The coating solution can not only impart stability over time to the fluororubber paste, but also improve the interlayer adhesion and abrasion resistance of the fluororubber metal laminated sheet. Therefore, when it is used as a cylinder head gasket, it is possible to cope with the reduction in rigidity due to the increase in combustion pressure of the engine, and with weight saving. As a result, it will greatly contribute to the improvement of fuel efficiency of automobiles.

## Description

### TECHNICAL FIELD

The present invention relates to a coating solution and a fluororubber metal laminated sheet using the same. More particularly, the present invention relates to a coating solution that has excellent fluororubber paste stability, interlayer adhesion, abrasion resistance, etc., and also relates to a fluororubber metal laminated sheet using the same.

### BACKGROUND ART

Cylinder head gaskets are the parts that seal between engine heads and blocks by laminating rubber and the like on metal sheets.

Engines are moving in the direction of increased combustion pressure and weight saving for the purpose of low fuel consumption. As the combustion pressure increases, the repeated impact load on seal parts increases. In addition, lowering the weight of the engine by weight saving reduces rigidity and increases vibration caused by engine combustion.

Due to these circumstances on the engine side, cylinder head gaskets are also further required to have abrasion resistance against vibration and interlayer adhesion. In conventional technologies, the sealing properties were deteriorated due to abrasion, which sometimes caused problems, such as gas leakage.

Therefore, rubber parts of cylinder head gaskets are required to have abrasion resistance and excellent interlayer adhesion. Adhesion components are compounded in order to secure interlayer adhesion, and fillers, such as silica, are compounded in order to secure abrasion resistance.

Silane coupling agents for silica used in fluororubber include epoxy group-containing silanes, amino group-containing silanes, and the like. Epoxy group-containing silane coupling agents were excellent in the stability of fluororubber pastes used in the production of cylinder head gaskets (fluororubber metal laminated sheets); however, the interlayer adhesion was insufficient. When an amino group-containing silane coupling agent was used, the interlayer adhesion was excellent; however, the stability of fluororubber pastes used in the production of cylinder head gaskets was poor, and the materials tended to be unsuitable for mass production.

Patent Documents 1 and 2 state that amino group-containing silane coupling agents are preferable as silane coupling agents when graphite, carbon black, molybdenum disulfide, magnesium oxide, calcium hydroxide, calcium carbonate, or the like is contained as an inorganic filler.

The amino group-containing silane coupling agents referred therein include N-β-aminoethyl-γ-aminopropyltrimethoxysilane, N-β-aminoethyl-γ-aminopropylmethyldimethoxysilane, N-phenyl-γ-aminopropyltrimethoxy silane, 3-triethoxysilyl-N-(1,3-dimethyl-dibutydene)propylamine, N-(β-aminoethyl)-γ-aminopropylmethyldimethoxysilane, N-(β-aminoethyl)-γ-aminopropyltrimethoxysilane, N-(β-aminoethyl)-γ-aminopropyltriethoxysilane, γ-aminopropyltrimethoxysilane, γ-aminopropyltriethoxysilane, and the like; however, no reference is made to the amino group-containing silane coupling agent used in each Example.

### PRIOR ART DOCUMENTS

### PATENT DOCUMENTS

Patent Document 1 : JP-A-2004-68886
Patent Document 2 : JP-A-2010-255644
Patent Document 3 : JP-A-61-12741

### OUTLINE OF THE INVENTION

### PROBLEM TO BE SOLVED BY THE INVENTION

Objects of the present invention are to provide a coating solution having excellent fluororubber paste stability, interlayer adhesion, abrasion resistance, etc., and also to provide a fluororubber laminated metal sheet using the same.

### MEANS FOR SOLVING THE PROBLEM

The first object of the present invention can be achieved by a coating solution comprising an organic solvent solution containing polyol-crosslinkable fluororubber, a polyol vulcanizing agent, and N-phenyl-3-aminopropyltrialkoxysilane, preferably a coating solution further containing an epoxy resin in addition thereto.

Moreover, the second object of the present invention can be achieved by a fluororubber metal laminated sheet formed by applying the above coating solution to a metal sheet, followed by vulcanizing.

### EFFECT OF THE INVENTION

Since a generally used amino group-containing silane coupling agent is highly reactive, the reaction proceeds immediately after it is put into a fluororubber paste, and the fluororubber paste lacks stability over time. In the present invention, N-phenyl-3-aminopropyltrialkoxysilane (N-phenyl-γ-aminopropyltrialkoxysilane) is used as an amino group-containing silane coupling agent, and one hydrogen atom in the highly reactive amino group is replaced by a phenyl group, thereby suppressing the reaction between the amino group and the fluororubber in the fluororubber paste. In this respect, the stability over time is improved.

Effects resulting from the improved stability over time of the fluororubber paste include coating stability during mass production, extended use time of the fluororubber paste (improvement of yield), and the like.

The present invention can not only impart stability over time to the fluororubber paste, but also improve the interlayer adhesion and abrasion resistance of the fluororubber metal laminated sheet. Therefore, when it is used as a cylinder head gasket, it is possible to cope with the reduction in rigidity due to the increase in combustion pressure of the engine, and with weight saving. As a result, it will greatly contribute to the improvement of fuel efficiency of automobiles.

### EMBODIMENTS FOR CARRYING OUT THE INVENTION

The fluororubber metal laminated sheet is produced by applying a coating solution to a metal sheet, followed by vulcanization bonding.

Examples of the metal sheet include stainless steel sheets, SPCC steel sheets, aluminum sheets, and the like, the surfaces of which are not roughened; and stainless steel sheets, SPCC steel sheets, aluminum sheets, and the like, the surfaces of which are roughened by shot blasting, scotch blasting, hairline, dull finish, or the like. In general, those solvent degreased or alkali degreased are used as they are. For gasket material applications, metal sheets with a thicknesses of about 0.1 to 1 mm are used.

Examples of the polyol-crosslinkable fluororubber include homopolymers or alternating copolymers such as vinylidene fluoride, hexafluoropropylene, pentafluoropropylene, trifluoroethylene, trifluorochloroethylene, tetrafluoroethylene, vinyl fluoride, perfluoroacrylic acid ester, perfluoroalkyl acrylate, perfluoro(methyl vinyl ether), perfluoro(ethyl vinyl ether), and perfluoro(propyl vinyl ether); or copolymers thereof with propylene. Preferably, a vinylidene fluoride-hexafluoropropylene copolymer, a vinylidene fluoride-hexafluoropropylene-tetrafluoroethylene terpolymer, a tetrafluoroethylene-propylene copolymer, and the like are used. In practice, generally commercially available polyol-crosslinkable fluororubber can be used as it is.

Examples of the polyol-based vulcanizing agent used as a vulcanizing agent for the polyol-crosslinkable fluororubber include 2,2-bis(4-hydroxyphenyl)propane [bisnol A], 2,2-bis(4-hydroxyphenyl)perfluoropropane [bisphenol AF], bis(4-hydroxyphenyl)sulfone [bisphenol S], 2,2-bis(4-hydroxyphenyl)methane [bisphenol F], bisphenol A-bis(diphenyl phosphate), 4,4'-dihydroxydiphenyl, 2,2-bis(4-hydroxyphenyl)butane, and the like; preferably, bisphenol A, bisphenol AF, and the like are used. These may also be in the form of alkali metal salts or alkaline earth metal salts. Such a polyol-based vulcanizing agent is generally used at a ratio of about 3 to 20 parts by weight, preferably about 5 to 15 parts by weight, based on 100 parts by weight of the polyol-crosslinkable fluororubber. The polyol-based vulcanizing agent can be also used as a masterbatch with fluororubber.

As the vulcanization accelerator, quaternary onium salts such as quaternary phosphonium salts or quaternary ammonium salts are used. Preferably, quaternary phosphonium salts are used. The onium salt can be used at a ratio of about 2 to 9 parts by weight, preferably about 4 to 7 parts by weight, based on 100 parts by weight of the polyol-crosslinkable fluororubber. The vulcanization accelerator can be also used as a master batch with fluororubber.

The quaternary phosphonium salts are compounds represented by the following general formula :

[PR₁R₂R₃R_{4]} ⁺X⁻

(where R₁ to R₄ are alkyl groups having 1 to 25 carbon atoms, alkoxyl groups, aryl groups, alkylaryl groups, aralkyl groups or polyoxyalkylene groups, two or three of which can form a heterocyclic structure together with P. X is an anion such as Cl⁻, Br⁻, I⁻, HSO₄⁻, H₂PO₄⁻, RCOO⁻, ROSO₂⁻, CO₃²⁻). They include, for example, tetraphenylphosphonium chloride, benzyltriphenylphosphonium bromide, benzyltriphenylphosphonium chloride, triphenylmethoxymethylphosphonium chloride, triphenylmethylcarbonylmethylphosphonium chloride, triphenylethoxycarbonylmethylphosphonium chloride, trioctylbenzylphosphonium chloride, trioctylmethylphosphonium chloride, trioctylethylphosphonium acetate, tetraoctylphosphonium chloride, trioctylethylphosphonium dimethylphosphate, etc. The quaternary phosphonium salts can be equimolar molecular compounds with active hydrogen-containing aromatic compounds, such as polyhydroxyaromatic compound, as disclosed in Patent Document 3.

Furthermore, the quaternary ammonium compounds are compounds represented by the following general formula :

[NR₁R₂R₃R₄] ⁺X⁻

(where R₁ to R₄ and X⁻ have the same meanings as defined above) and include, for example, 1-alkylpyridinium salts, 5-aralkyl-1,5-diazabicyclo[4.3.0]-5-nonenium salts, 8-aralkyl-1,8- diazabicyclo[5.4.0]-7-undecenium salts, etc.

As the N-phenyl-3-aminopropyltrialkoxysilane, one having methyl group or ethyl group as the alkoxy group is preferably used at a ratio of about 1 to 15 parts by weight, preferably about 3 to 10 parts by weight, based on 100 parts by weight of the polyol-crosslinkable fluororubber. If the use ratio is less than this range, adhesiveness cannot be satisfied. In contrast, if the use ratio is greater than this range, abrasion characteristics are deteriorated.

It is preferable that the polyol-crosslinkable fluororubber is compounded with, in addition to these essential components, an epoxy resin in an amount of about 40 parts by weight or less, preferably about 5 to 40 parts by weight, particularly preferably about 10 to 30 parts by weight, based on 100 parts by weight of the polyol-crosslinkable fluororubber. The epoxy resin acts as a reinforcing material for fluororubber.

Examples of the epoxy resin include halogen-free epoxy resins having two or more epoxy groups per molecule, preferably aromatic ring-containing epoxy resins, such as bifunctional epoxy resins (e.g., bisphenol A type epoxy resin and bisphenol F type epoxy resin) and polyfunctional epoxy resins (e.g., phenol novolac type epoxy resin and cresol novolac type epoxy resin).

Moreover, silica can be compounded in an amount of about 50 parts by weight or less, preferably about 5 to 20 parts by weight, based on 100 parts by weight of the polyol-crosslinkable fluororubber. However, if silica is used at a ratio greater than this range, sealing performance is deteriorated. As silica, fine powdered silicic acid (anhydrous silicic acid, hydrous silicic acid) and artificial silicic acid (hydrous calcium silicate), both of which comprise SiO₂ as a main component, can be used. Commercial products having a particle diameter of about 200 nm or less, preferably about 100 nm or less, can be used as they are.

Each of the above components is used as being compounded with various fillers, such as carbon black, graphite, titanium dioxide, alumina, rouge, clay, calcium carbonate, PTFE powder, and the like. In terms of reinforcing properties, carbon black, preferably MT carbon black, is used. Further, an oxide or hydroxide of a divalent metal, such as magnesium oxide, zinc oxide, calcium oxide, or calcium hydroxide, basic magnesium aluminum hydroxyl carbonate hydrate (hydrotalcite), or the like is used as an acid acceptor.

Each of these components is prepared as an organic solvent solution, and configures a coating solution. Examples of the organic solvent solution include ketone-based organic solvents, such as methyl ethyl ketone, methyl propyl ketone, methyl butyl ketone, methyl isobutyl ketone, diisobutyl ketone, phorone, and isophorone; alcohol-based organic solvents, such as methanol, ethanol, and isopropanol; and the like. These are used singly or as a mixed solvent. Preferably, an isophorone-methyl ethyl ketonemethanol mixed solvent is used.

For dissolution of each component in an organic solvent, it is preferable that the components other than vulcanization components (a vulcanizing agent, a vulcanization accelerator, etc.) and an epoxy resin are kneaded with a pressure kneader or an open roll, and then dissolved in an organic solvent. Next, the vulcanization components and epoxy resin are dissolved therein, and the solid matters content is preferably adjusted to 35 to 40 wt.%. Finally, N-phenyl-3-aminopropyltrialkoxysilane, which is also a silane coupling agent, is compounded to prepare a fluororubber paste.

When a fluororubber layer is laminated on a metal sheet, a fluororubber paste is generally used as a one-pot type coating agent. The fluororubber coating solution is dissolved or dispersed using a general rotary agitator or a high shear dispersing machine, such as a homogenizer or a ball mill, and then prepared as an organic solvent solution whose solid matters content is adjusted to about 30 to 45 wt.%, preferably about 35 to 40 wt.%, using a triple roll or the like. At this time, a commercially available siliconebased defoaming agent may be added and used, if necessary.

As the organic solvent used in the formation of a fluororubber coating solution being a one-pot type coating agent, ketones such as methyl ethyl ketone, 2-butanone, din-propyl ketone, diisobutyl ketone, phorone, isophorone, and cyclohexanone, or alcohols such as methanol, ethanol, isopropanol, n-butanol, amyl alcohol, and heptanol are preferably used. They can be a mixed solvent of the ketone and the alcohol.

The organic solvent solution of fluororubber composition so prepared can be applied as a one-pot type coating agent directly to the surface of a metallic sheet free from either chromating treatment or chromating substitute treatment to a desired coating thickness, preferably dried thickness of about 10 to about 100 *µ*m, preferably about 20 to about 30 *µ*m, by coating with a knife coater, a flow coater, a roll coater, etc., or by screen printing process, followed by drying and oven vulcanization at about 150 to about 250°C for about 2 to 30 minutes, thereby forming a fluororubber-metal laminated sheet.

A liquid dispersion prepared optionally by adding a lubricating component such as graphite, PTFE, molybdenum dioxide, carbon black, paraffin wax, etc. as the main component, and a binder such as cellulose resin, acrylic resin, polybutadiene resin, urethane resin, etc., and by dispersing in an organic solvent such as toluene, etc., or water, can be applied to the vulcanized fluororubber layer by coating, thereby forming a nonsticking layer having a thickness of about 1 to 10 *µ* m to prevent seizing or sticking.

### EXAMPLES

The following describes the present invention with reference to Examples.

### Example 1

| | |
|---|---|
| Fluororubber (Viton A-200, produced by DuPont) | 100 parts by weight |
| MT Carbon black (THERMAX N990, produced by Cancarb Limited) | 25 parts by weight |
| Graphite (A-O, produced by East Japan Carbon Co., Ltd.) | 30 parts by weight |
| Silica (NIPSIL ER, produced by Tosoh Silica Corporation) | 10 parts by weight |
| Magnesium oxide (KYOWAMAG 150, produced by Kyowa Chemical Industry Co., Ltd.) | 8 parts by weight |
| Hydrotalcite (DHT-4A, produced by Kyowa Chemical Industry Co., Ltd.) | 3 parts by weight |
| Processing aid (VPA #2, produced by Du Pont) | 2 parts by weight |
| Vulcanizing agent (CURATIVE #30, produced by Du Pont) | 5 parts by weight |
| Vulcanization accelerator (CURATIVE #20, produced by Du Pont) | 9 parts by weight |
| Epoxy resin (EPICLON N695, produced by DIC Corporation) | 25 parts by weight |

Of the above components, those other than the vulcanizing agent, vulcanization accelerator and epoxy resin were kneaded with a pressure kneader or an open roll.

The obtained kneaded product was dissolved in an isophorone-methyl ethyl ketonemethanol (volume ratio = 7:2:1) mixed solvent, and the vulcanizing agent, vulcanization accelerator and epoxy resin were dissolved therein so that the solid matters content was adjusted to about 35 to 40 wt.%. Finally, 3 parts by weight of N-phenyl-3-aminopropyltrimethoxysilane (KBM573, produced by Shin-Etsu Chemical Co., Ltd.), which was a silane coupling agent, was compounded to prepare a fluororubber paste.

The prepared fluororubber paste was applied to the surface of a stainless steel SUS301 sheet (thickness: 0.2 mm) so that the rubber thickness after vulcanization was 20 to 25 µm, followed by vulcanization in an oven at 230°C for 15 minutes, thereby obtaining a fluororubber laminated metal sheet.

The fluororubber paste and the fluororubber laminated metal sheet were measured and evaluated by the methods described below.

Evaluation of fluororubber paste stability:
The fluororubber paste was measured using a Brookfield B type viscometer (SB type viscometer, Annex 1 of JIS K7117) under the condition of #3 SB Spindle 12 rpm to measure the viscosity immediately after preparation and after 4 hours. When the viscosity change after 4 hours was within 20%, the stability was evaluated as O, and when the viscosity change exceeded 20%, the stability was evaluated as ×.

Adhesion test:
The fluororubber laminated metal sheet was subjected to an adhesion test according to the drawing test method of JIS K6894 for two items, i.e., initial adhesiveness and heat-resistant adhesiveness after an aging test at 200°C for 70 hours. If the adhesive strength was not sufficient, the coating film would peel off; thus, this was evaluated on a 5-point scale. When the score was 4 points or more, the adhesiveness was evaluated as **○**.
5 points: No peeling was observed.
4 points: Slight peeling was observed near the intersection of the drawn circles.
3 points: Slight peeling was observed around the drawn circles.
2 points: Peeling was observed around the drawn circles.
1 points: Peeling was observed in a wide range.

Abrasion test: The fluororubber laminated metal sheet was subjected to reciprocating motion using an abrasion tester (FPR-2100, produced by Rhesca Co., Ltd.) and an MS5-25 straight pin under the following conditions: load: 1 kg, linear velocity: 6.3 cm/sec, and temperature: 25°C, 80°C and 150°C. The number of times when the metal sheet was exposed was defined as the number of abrasion times.

### Example 2

In Example 1, the amount of N-phenyl-3-aminopropyltrimethoxysilane was changed to 5 parts by weight.

### Example 3

In Example 1, the amount of N-phenyl-3-aminopropyltrimethoxysilane was changed to 10 parts by weight.

### Comparative Example 1

In Example 1, as the silane coupling agent, the same amount (3 parts by weight) of 3-aminopropyltrimethoxysilane (KBM-903, produced by Shin-Etsu Chemical Co., Ltd.) was used.

### Comparative Example 2

In Example 1, as the silane coupling agent, 5 parts by weight of 3-aminopropyltriethoxysilane (KBE-903, produced by Shin-Etsu Chemical Co., Ltd.) was used.

### Comparative Example 3

In Example 1, as the silane coupling agent, 10 parts by weight of 3-aminopropyltriethoxysilane (KBE-903) was used.

### Comparative Example 4

In Example 1, as the silane coupling agent, 5 parts by weight of 3-glycidoxypropyltrimethoxysilane (KBM-403, produced by Shin-Etsu Chemical Co., Ltd.) was used.

### Comparative Example 5

In Example 1, as the silane coupling agent, 10 parts by weight of 3-glycidoxypropyltrimethoxysilane (KBM-403) was used.

### Comparative Example 6

In Example 1, epoxy resin was not used.

The following table shows the measurement and evaluation results obtained in the above Examples and Comparative Examples.

**Table**

| Measurement - Evaluation | | Example | | | Comparative Example | | | | | |
|---|---|---|---|---|---|---|---|---|---|---|
| | | 1 | 2 | 3 | 1 | 2 | 3 | 4 | 5 | 6 |
| Rubber paste stability | | | | | | | | | | |
| Immediately after preparation (mPa▪s) | | 1910 | 1850 | 1810 | 2310 | 2300 | 2240 | 1940 | 1900 | 1500 |
| | After 4 hours (mPa▪s) | 2020 | 2010 | 1960 | - | 3480 | - | 2230 | 2210 | 1640 |
| | Evaluation | **○** | **○** | **○** | × | × | × | **○** | **○** | **○** |
| Adhesion test | | | | | | | | | | |
| | Initial | | | | | | | | | |
| | Point | 4 | 5 | 4 | 4 | 4 | 4 | 4 | 3 | 2 |
| | Evaluation | ○ | ○ | ○ | ○ | ○ | ○ | ○ | × | × |
| After heat resistance test | | | | | | | | | | |
| | Point | 4 | 4 | 4 | 4 | 4 | 4 | 3 | 3 | 2 |
| | Evaluation | ○ | ○ | ○ | ○ | ○ | ○ | × | × | × |
| Abrasion test | | | | | | | | | | |
| | 25°C (number of times) | 80 | 84 | 96 | 60 | 64 | 61 | 62 | 34 | 23 |
| | 80°C (number of times) | 13 | 15 | 16 | 8 | 10 | 11 | 10 | 5 | 3 |
| | 150°C (number of times) | 3 | 3 | 4 | 1 | 1 | 1 | 1 | 1 | 1 |

| | | | | | | | | | | |
|---|---|---|---|---|---|---|---|---|---|---|
| Note) "-" in the rubber paste stability (after 4 hours) indicates >10000, which was unmeasurable. | | | | | | | | | | |

The above results reveal that those according to the present Examples have excellent rubber paste stability and abrasion resistance at each measurement temperature.

In contrast, it is revealed that those using 3-aminopropyltrimethoxysilane or 3-aminopropyltriethoxysilane lack rubber paste stability, and that those using 3-glycidoxypropyltrimethoxysilane and those using no epoxy resin lack interlayer adhesion in the rubber metal laminated sheets.

## Claims

1. A coating solution comprising an organic solvent solution containing polyol-crosslinkable fluororubber, a polyol vulcanizing agent, and N-phenyl-3-aminopropyltrialkoxysilane.

2. The coating solution according to claim 1, wherein the polyol vulcanizing agent is used at a ratio of 3 to 20 parts by weight and the N-phenyl-3-aminopropyltrialkoxysilane is used at a ratio of 1 to 15 parts by weight, based on 100 parts by weight of the polyol-crosslinkable fluororubber.

3. The coating solution according to claim 1, wherein 40 parts by weight or less of epoxy resin is further comprised.

4. The coating solution according to claim 1, wherein 50 parts by weight or less of silica resin is further comprised.

5. A method for producing the coating solution according to claim 3, the method comprising kneading components other than a vulcanization component and an epoxy resin, then dissolving the resultant in an organic solvent, dissolving the vulcanization component and the epoxy resin therein, and then compounding N-phenyl-3-aminopropyltrialkoxysilane.

6. The coating solution according to claim 1, 2, 3, or 4, which is applied onto a metal sheet.

7. A fluororubber metal laminated sheet comprising a metal sheet, on which a vulcanization coating layer formed from the coating solution according to claim 6 is laminated.

8. The fluororubber metal laminated sheet according to claim 7, which is used as a gasket.

9. The fluororubber metal laminated sheet according to claim 8, which is used as a cylinder head gasket.
